(19) Europäisches Patentamt
European Patent Office
Office européen des brevets

(11) **EP 1 909 424 A1**

(12) **EUROPEAN PATENT APPLICATION**
published in accordance with Art. 153(4) EPC

(43) Date of publication:
**09.04.2008 Bulletin 2008/15**

(51) Int Cl.:
*H04J 11/00* *(2006.01)*

(21) Application number: **06780862.6**

(86) International application number:
**PCT/JP2006/313537**

(22) Date of filing: **07.07.2006**

(87) International publication number:
**WO 2007/013278 (01.02.2007 Gazette 2007/05)**

(84) Designated Contracting States:
**DE ES FR GB IT**

(30) Priority: **27.07.2005 JP 2005217717**

(71) Applicant: **Suehiro, Naoki**
**Tsukuba-shi,**
**Ibaraki 305-0031 (JP)**

(72) Inventor: **Suehiro, Naoki**
**Tsukuba-shi,**
**Ibaraki 305-0031 (JP)**

(74) Representative: **Vinsome, Rex Martin et al**
**Urquhart-Dykes & Lord LLP**
**Cale Cross House**
**Pilgrim Street**
**Newcastle upon Tyne NE1 6SU (GB)**

(54) **DATA COMMUNICATION SYSTEM AND DATA TRANSMITTING APPARATUS**

(57)   A data communication system and a data transmitting apparatus with improved noise immunity are disclosed. The data communication system includes an orthogonal transforming unit using an N times N orthogonal matrix; a signal transforming unit; a transmitting unit; a receiving unit; a signal inverse-transforming unit; and an orthogonal inverse-transforming unit.

## FIG.16

**Description**

**BACKGROUND OF THE INVENTION**

1. Field of the Invention

The present invention relates to a data communication system and a data transmitting apparatus including an orthogonal transforming unit.

2. Description of the Related Art

OFDM (Orthogonal Frequency Division Multiplexing) is used for reasons of the resistance to frequency selective fading, the tolerance to narrowband interference, the high efficiency of frequencies, and easy processing in the frequency domain.

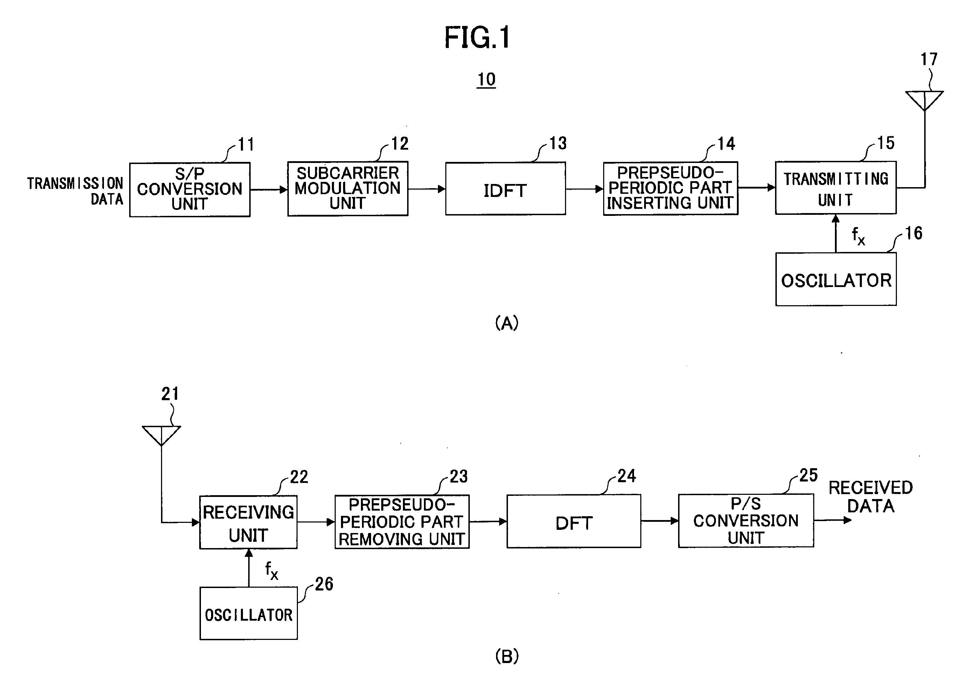

Fig. 1(A) shows a transmitting apparatus 10 which includes an S/P (serial/parallel) conversion unit 11, a subcarrier modulation unit 12, an IDFT (Inverse Discrete Fourier Transform) unit 13, a prepseudo-periodic part inserting unit 14, a transmitting unit 15, an oscillator 16, and an antenna 17. The prepseudo-periodic part inserting unit 14 is generally referred to as a guard interval inserting unit.

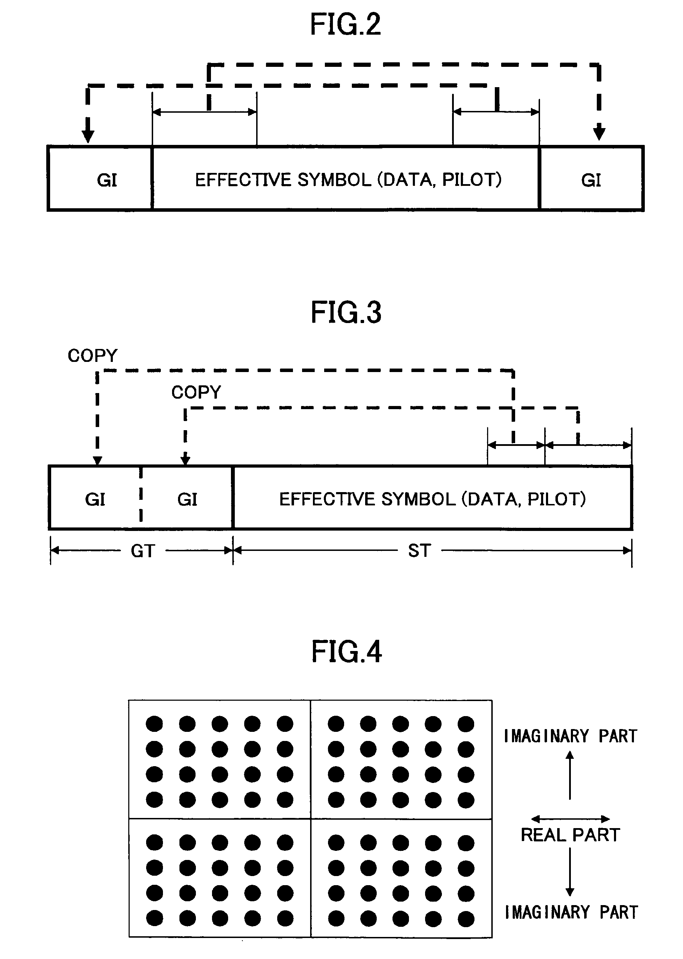

Transmission data (for example, a digital information sequence) is converted into parallel signals by the S/P (serial/parallel) conversion unit 11. The converted parallel signals are modulated into subcarriers for the predetermined number of bits by the subcarrier modulation unit 12. A modulation scheme for subcarriers is selected from BPSK (Binary Phase Shift Keying), QPSK (Quadrature Phase Shift Keying), 16QAM (Quadrature Amplitude Modulation), and 64QAM. Fig. 4 shows a signal constellation for 64QAM.

The signal output from the subcarrier modulation unit 12 based on BPSK, QPSK, 16QAM, or 64QAM is transformed based on inverse-DFT (Inverse Discrete Fourier Transform), and then the plural subcarrier signals mutually having orthogonal relationships are transformed into a time-domain signal.

Then, the prepseudo-periodic part inserting unit 14 inserts a guard interval GI. Specifically, as shown in Fig. 2, the latter part of an effective symbol is copied and attached before the effective symbol, and the former part of the effective symbol is copied and attached after the effective symbol (the duration of the effective symbol is referred to as symbol time ST).

Alternatively, as shown in Fig. 3, the latter part of the effective symbol may be copied and attached before the effective symbol. The case where the latter part (2GI) of the effective symbol is copied and attached corresponds to Fig. 2.

The OFDM signal with the guard interval is transmitted from the antenna 17 after the transmitting unit 15 modulates the carrier output from the oscillator 16 (carrier frequency $f_x$).

A receiving apparatus shown in Fig. 1(B) includes an antenna 21, a receiving unit 22, an oscillator 26, a prepseudo-periodic part removing unit 23, a DFT unit 24, and a P/S (parallel/serial) conversion unit 25.

The receiving apparatus shown in Fig. 1(B) performs operations in the reverse order for the transmitting apparatus 10. Specifically, the receiving unit 22 generates the OFDM baseband signal using the output from the oscillator 26. The prepseudo-periodic part removing unit 23 extracts the duration unaffected by the other symbols (effective symbol ST) from the OFDM baseband signal with propagation delay (for example, multipath delay).

Then, the OFDM signal is DFT-transformed by the DFT unit 24, and then parallel-to-serial converted by the P/S conversion unit 25. Finally, received data is output from the P/S conversion unit 25.

[Problem(s) to be solved by the Invention]

Although the OFDM system is efficient, it has limited noise immunity, particularly when 64QAM is used for the modulation scheme for subcarriers.

In view of the aforementioned problem, it is a general object of the present invention to provide a data communication system and a data transmitting apparatus with improved noise immunity.

**SUMMARY OF THE INVENTION**

In order to achive the object of the present invention, a data communication system in one aspect of the present invention includes:

an orthogonal transforming unit using an N times N orthogonal matrix;
an OFDM transforming unit;
a transmitting unit;

a receiving unit;
an OFDM inverse-transforming unit; and
an orthogonal inverse-transforming unit; wherein
the orthogonal transforming unit orthogonally transforms transmission data,
the OFDM transforming unit transforms the data orthogonally transformed by the orthogonal transforming unit into an OFDM baseband signal,
the transmitting unit transmits the OFDM baseband signal transformed by the OFDM transforming unit after transforming the OFDM baseband signal into a high frequency signal,
the receiving unit generates the OFDM baseband signal from the received high frequency signal,
the OFDM inverse-transforming unit OFDM-inverse-transforms the OFDM baseband signal generated by the receiving unit, and
the orthogonal inverse-transforming unit orthogonally inverse-transforms the orthogonally transformed signal output from the OFDM inverse-transforming unit.

Although an orthogonal matrix is typically intended for real numbers, the orthogonal matrix in the present invention includes not only real numbers but also complex numbers. Therefore, the orthogonal matrix in the present invention includes a Unitary matrix, an Hadamard matrix, and a DFT matrix.

Also, in order to achive the object of the present invention, a modulation scheme for subcarriers in the OFDM baseband signal may be selected from BPSK, QPSK, 16QAM, and 64QAM.

Further, in order to achive the object of the present invention, a data communication system in one aspect of the present invention includes:

an orthogonal transforming unit using an N times N orthogonal matrix;
a ZCZ transforming unit;
a transmitting unit;
a receiving unit;
a ZCZ inverse-transforming unit; and
an orthogonal inverse-transforming unit; wherein
the orthogonal transforming unit orthogonally transforms transmission data,
the ZCZ transforming unit transforms the data orthogonally transformed by the orthogonal transforming unit into a ZCZ baseband signal,
the transmitting unit transmits the ZCZ baseband signal transformed by the ZCZ transforming unit after transforming the ZCZ baseband signal into a high frequency signal,
the receiving unit generates the ZCZ baseband signal from the received high frequency signal,
the ZCZ inverse-transforming unit ZCZ-inverse-transforms the ZCZ baseband signal generated by the receiving unit, and
the orthogonal inverse-transforming unit orthogonally inverse-transforms the orthogonally transformed signal output from the ZCZ inverse-transforming unit.

Also, in order to achive the object of the present invention, the transform in the orthogonal transforming unit may be selected from a Unitary transform, an Hadamard transform, and a DFT transform.

Also, in order to achive the object of the present invention, the orghogonal transforming unit may comprise N adders and plural orthogonal transforming devices using the N times N orthogonal matrix with N input terminals and N output terminals,
different data may be input to each input terminal in the orthogonal transforming devices,
the adders may add outputs from the corresponding output terminals in the plural orthogonal transforming devices, and outputs from the orthogonal transforming unit may comprise outputs from the N adders.

Also, in order to achive the object of the present invention, the transmission data may be input to the OFDM transforming unit after the transmission data is transformed from binary data to ternary data.

Also, in order to achive the object of the present invention, a modulation scheme for subcarriers in the OFDM baseband signal may comprise a ternary QAM scheme.

Further, in order to achive the object of the present invention, a data transmitting apparatus in one aspect of the present invention includes:

an orthogonal transforming unit using an N times N orthogonal matrix;
an OFDM transforming unit; and
a transmitting unit; wherein
the orthogonal transforming unit orthogonally transforms transmission data,

the OFDM transforming unit transforms the data orthogonally transformed by the orthogonal transforming unit into an OFDM baseband signal, and

the transmitting unit transmits the OFDM baseband signal transformed by the OFDM transforming unit after transforming the OFDM baseband signal into a high frequency signal.

Further, in order to achive the object of the present invention, a data transmitting apparatus in one aspect of the present invention includes:

an orthogonal transforming unit using an N times N orthogonal matrix;
a ZCZ transforming unit; and
a transmitting unit; wherein
the orthogonal transforming unit orthogonally transforms transmission data,
the ZCZ transforming unit transforms the data orthogonally transformed by the orthogonal transforming unit into a ZCZ baseband signal, and
the transmitting unit transmits the ZCZ baseband signal transformed by the ZCZ transforming unit after transforming the ZCZ baseband signal into a high frequency signal.

Further, in order to achive the object of the present invention, a data transmitting apparatus in one aspect of the present invention includes:

an orthogonal transforming unit using an N times N orthogonal matrix;
an OFDM transforming unit;
a ZCZ transforming unit;
a transmitting unit;
a transmission condition detecting unit; and
a transmission scheme switching unit; wherein
the orthogonal transforming unit orthogonally transforms transmission data,
the OFDM transforming unit transforms the data orthogonally transformed by the orthogonal transforming unit into an OFDM baseband signal,
the ZCZ transforming unit transforms the data orthogonally transformed by the orthogonal transforming unit into a ZCZ baseband signal,
the transmitting unit transmits the OFDM baseband signal or the ZCZ baseband signal after transforming the OFDM baseband signal or the ZCZ baseband signal into a high frequency signal,
the transmission condition detecting unit detects a transmission condition, and
the transmission scheme switching unit switches between the OFDM transforming unit and the ZCZ transforming unit based on the transmission condition.

[Effect of the Invention]

According to an embodiment of the present invention, it is possible to provide a data communication system and a data transmitting apparatus with improved noise immunity.

## BRIEF DESCRIPTION OF THE DRAWINGS

Fig. 1 shows a data communication system.
Fig. 2 shows a diagram for illustrating the case where guard intervals are provided before and after an effective symbol.
Fig. 3 shows a diagram for illustrating insertion of a guard interval.
Fig. 4 shows an 8 times 8 complex plane.
Fig. 5 shows a diagram for illustrating the principle of the present invention.
Fig. 6 shows a first Hadamard matrix.
Fig. 7 shows a second Hadamard matrix.
Fig. 8 shows an orthogonal transforming unit using a 10 dimensional Hadamard matrix.
Fig. 9 shows an example of a complete complementary sequence.
Fig. 10 shows an example of ZCZ sequences.
Fig. 11 shows a transmitting side in a data communication system.
Fig. 12 shows a receiving side in a data communication system.

Fig. 13 shows a ZCZ transforming unit.
Fig. 14 shows a diagram where plural orthogonal transforming units are used.
Fig. 15 shows a comparative table of multi-level QAM.
Fig. 16 shows a first data communication system.
Fig. 17 shows a second data communication system.

## DESCRIPTION OF THE PREFERRED EMBODIMENTS

[Description of Notations]

| | |
|---|---|
| 31, 81, 91 | orthogonal transforming unit |
| 82, 82, 92 | signal transforming unit |
| 33, 85, 95 | signal inverse-transforming unit |
| 34, 86, 96 | orthogonal inverse-transforming unit |
| 41, 71, 72 | Hadamard transforming unit |
| 42, 55 P/S | conversion unit |
| 43 | ZCZ transforming unit |
| 44, 83, 93 | transmitting unit |
| 51, 84, 94 | receiving unit |
| 52 | ZCZ inverse-transforming unit |
| 53 | S/P conversion unit |
| 54 | Hadamard inverse-transforming unit |
| 97 | transmission scheme swithing unit |
| 98 | transmission condition detecting unit |
| 99 | switch signal detecting unit |

[Best Mode of Carrying Out the Invention]

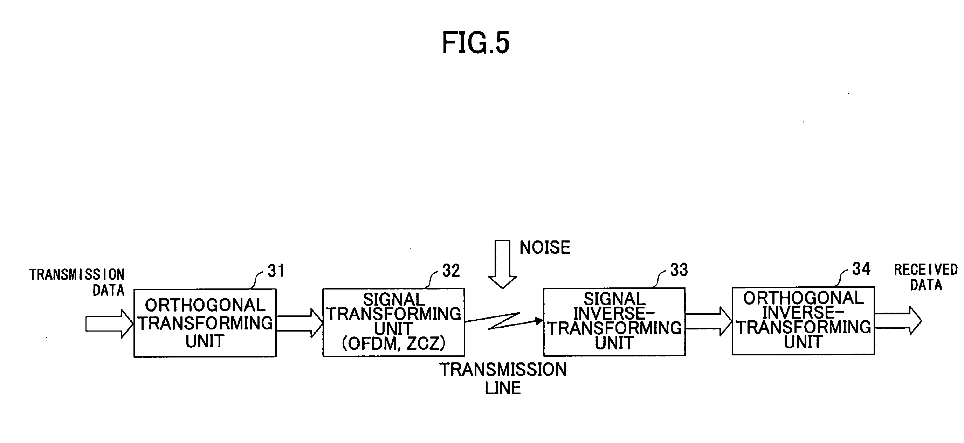

With reference to Fig. 5, the principle of the present invention is described. The system shown in Fig. 5 includes an orthogonal transforming unit 31, a signal transforming unit (for example, OFDM, ZCZ) 32, a signal inverse-transforming unit 33, and an orthogonal inverse-transforming unit 34.

The orghogonal transforming unit 31 orthogonally transforms transmission data using an N times N orthogonal matrix. The transform in the orthogonal transforming unit is selected from a Unitary transform, an Hadamard transform, and a DFT transform.

The signal transforming unit (for example, OFDM, ZCZ) 32 transforms the data orthogonally transformed by the orthogonal transforming unit 31 into an OFDM signal or a ZCZ signal for transmission. A transmission line may be selected from a wireless line, wired line, LAN, and so on.

The signal inverse-tranforming unit 33 inverse-transforms the received OFDM signal or ZCZ signal and outputs the orthogonally transformed signal. The orthogonally transformed signal is inverse-transformed by the orthogonal inverse-transforming unit 34, and then received data is obtained.

According to an embodiment of the present invention, the orthogonal transforming unit 31 orthogonally transforms transmission data, and then the signal transforming unit (for example, OFDM, ZCZ) 32 transforms the transmission data into the signal for transmission.

Typically, transmission signals are influenced by external noise during transmission on the transmission line. According to the embodiment of the present invention, however, external noise has an influence on the orthogonally transformed signals, because the transmission data is orthogonally transformed. Because the signals are orthogonally transformed, noise is distributed among individual transmission data.

As a result, when the orthogonal inverse-transforming unit 34 inverse-transforms the received signals, the influence by the noise can be reduced. This is because noise applied to the individual transmission data is uncorrelated, and thus noise is cancelled during the inverse-transform by the orthogonal inverse-transforming unit 34.

In this manner, the embodiment of the present invention can provide a data communication system with improved noise immunity by orthogonally transforming transmission data.

[Orthogonal transforming unit]

The orthogonal transforming unit may use a 1024 times 1024 orthogonal matrix. Here, an example is described using the Hadamard transform.

The Hadamard transform is a kind of orthogonal transform, and uses herein a 10 dimensional matrix H(10) with elements selected from 1 and -1.

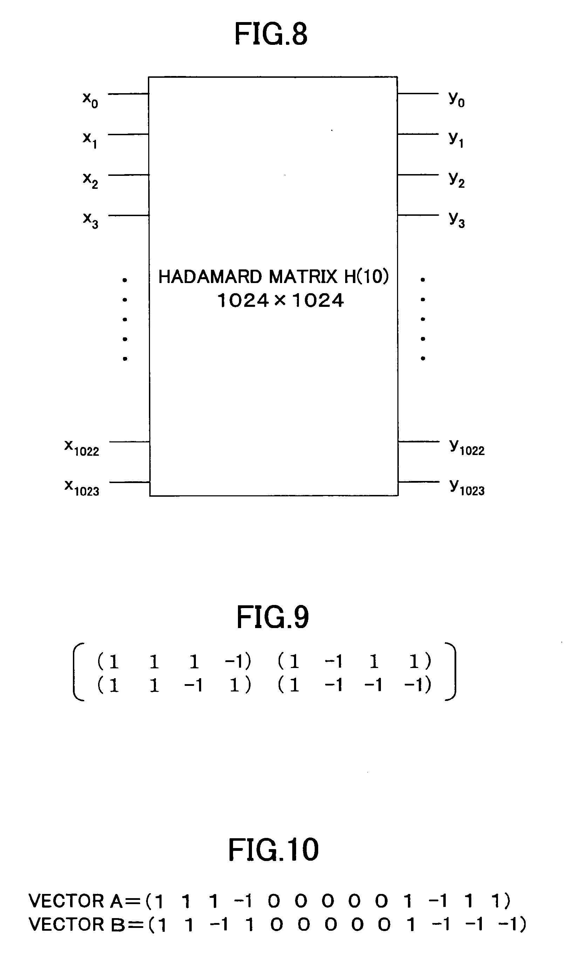

When time-series data $\{x\}=x_0, x_1, ... x_7 ...$ is divided into signal groups each including 1024 bits and each of the divided signal groups is serial/parallel converted, a 10 dimensional Hadamard matrix can be used. Specifically, as shown in Fig. 8, input data $X(x_0, x_1, ... x_{1023})^t$ as parallel data (hereinafter, "t" represents a transposed matrix) is input to the 10 dimensional Hadamard matrix H(10), and Hadamard-transformed into output data $Y(y_0, y_1, ... y_{1023})^t$ according to the following equation (1).

$$Y=H(10)X \qquad\qquad (1)$$

According to this equation (1), the input data $X(x_0, x_1, ... x_{1023})^t$ is transformed into the output data $Y(y_0, y_1, ... y_{1023})^t$. It should be noted that $X(x_0, x_1, ... x_{1023})$ represents a time-domain signal and $Y(y_0, y_1, ... y_{1023})$ represents a frequency-domain signal.

Thus, each data $x_0, x_1, ... x_{1023}$ in the input data X has an influence on each data $y_0, y_1, ... y_{1023}$ in the output data Y.

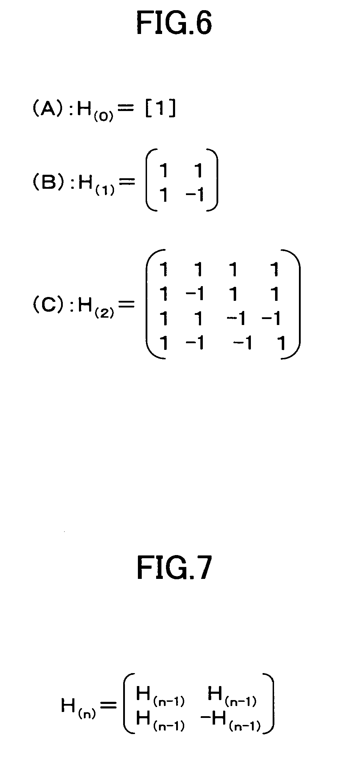

When the Hadamard matrix is expressed as H(0)=[1] as shown in Fig. 6(A), H(1) and H(2) are expressed as Figs. 6(B) and 6(C).

Typically, an Hadamard matrix H(n) is expressed as a recurrence formula as shown in Fig. 7. Accordingly, a 10 dimensional matrix H(10) can be obtained. This 10 dimensional matrix H(10) is expressed as a 1024 times 1024 orthogonal matrix.

Instead of the Hadamard transform, the Unitary transform or the DFT transform may be used in the orthogonal transforming unit.

[Signal transforming unit]

The signal transforming unit is described using a ZCZ (Zero Correlation Zone) sequence.

The ZCZ sequence is generated from a complete complementary sequence, and is a one dimensional sequence whose auto-correlation function and cross-correlation function become zero within a certain range. Fig. 9 shows an example of a complete complementary sequence with the order of 8. Fig. 10 shows two ZCZ sequences generated from the complete complementary sequence with the order of 8 shown in Fig. 9. It should be noted that two ZCZ sequences are generated from a complete complementary sequence with 4 sets, and four ZCZ sequences are generated from a complete complementary sequence with 16 sets. It should be also noted that the ZCZ sequences may include any number of zeros ("0") in Fig. 10, as long as the number of zeros in the vector A is equal to that in the vector B.

These ZCZ sequences can be used as spreading codes.

When the signal A shown in Fig. 10 is applied to a matched filter for the signal A, the following output is obtained.
000000080000000

When the signal A is applied to a matched filter for the signal B, the following output is obtained.
000000000000000

When the signal B shown in Fig. 10 is applied to the matched filter for the signal B, the following output is obtained.
000000080000000

When the signal B is applied to the matched filter for the signal A, the following output is obtained.
000000000000000

Therefore, the signals A and B can be used as spreading codes.

[Structure for the transmitting side]

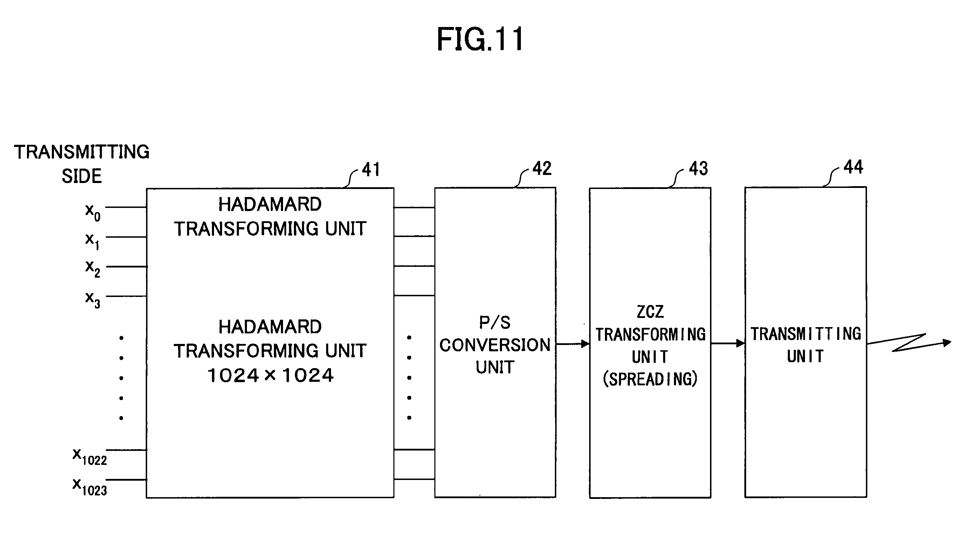

With reference to Fig. 11, the structure for the transmitting side using a ZCZ sequence in the signal transforming unit is described. The structure shown in Fig. 11 includes an Hadamard transforming unit 41, a P/S conversion unit 42, a ZCZ transforming unit 43, and a transmitting unit 44.

Time-series data $\{x\}=x_0, x_1, ... X_7 ...$ is divided into signals each including 1024 bits, input data $X(x_0, x_1, ... x_{1023})^t$ as the signal including 1024 bits is input to a 10 dimensional Hadamard matrix H41, and then output data $Y(y_0, y_1, ... y_{1023})^t$ is obtained.

The output data $Y(y_0, y_1, ... y_{1023})^t$ is converted into a serial signal by the P/S conversion unit 42, and then output data $Y(y_0, y_1, ... y_{1023})$ is obtained.

The ZCZ transforming unit 43 ZCZ-transforms the data $Y(y_0, y_1, ... y_{1023})$ to generate a ZCZ baseband signal.

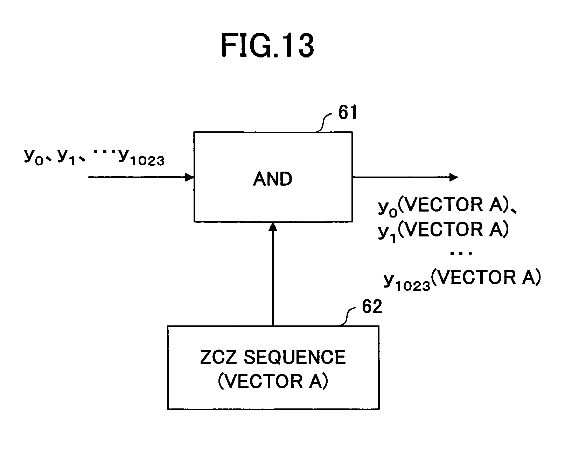

Specifically, as shown in Fig. 13, an AND circuit 61 performs an AND operation between the time-series data Y($y_0$, $y_1$, ... $y_{1023}$) and the ZCZ sequence (for example, the vector A) 62. As a result, the AND circuit 61 outputs $y_0$(vector A), $y_1$ (vector A), ... $y_{1023}$(vector A).

When the AND operation with the vector A is performed for each time slot for a bit in the output data Y, the vector A functions as a spreading sequence. In this case, the receiving side can reproduce the data Y($y_0$, $y_1$, ... $y_{1023}$) using a matched filter.

It should be noted that the AND operation with the vector A may not be perfomed for each time slot for the bit in the output data Y. In this case, the receiving side can reproduce the data Y($y_0$, $y_1$, ... $y_{1023}$) using a filter (correlator).

The signal (ZCZ baseband signal) which is ZCZ-transformed by the ZCZ transforming unit 43 is transformed into a high frequency signal for transmission by the transmitting unit 44.

[Structure for the receiving side]

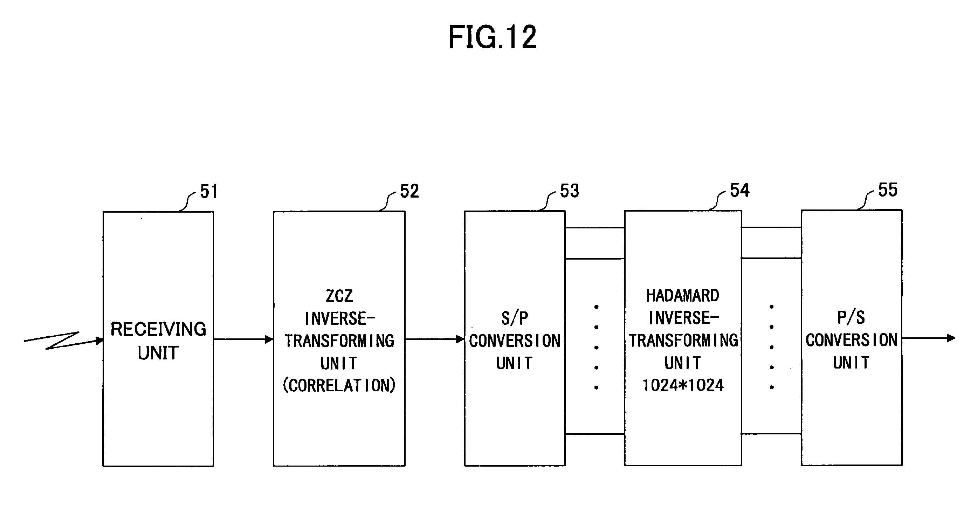

With reference to Fig. 12, the structure for the receiving side using a ZCZ sequence in the signal transforming unit is described. The structure shown in Fig. 12 includes a receiving unit 51, a ZCZ inverse-transforming unit 52, an S/P conversion unit 53, an Hadamard inverse-transforming unit 54, and a P/S conversion unit 55.

The receiving unit 51 receives the ZCZ-transformed signal to generate a ZCZ baseband signal. The ZCZ inverse-transforming unit 52 ZCZ-inverse-transforms the ZCZ baseband signal. Because the ZCZ-inverse-transformed signal is a serial signal, the S/P conversion unit 53 transforms the serial signal into parallel signals. Because the parallel signals are Hadamard-transformed signals, the Hadamard inverse-transforming unit 54 Hadamard-inverse-transforms the parallel signals. Because the Hadamard-inverse-transformed signals are parallel signals, the P/S conversion unit 55 converts the Hadamard-inverse-transformed signals into a serial signal to obtain received data.

[Embodiment including plural orthogonal transforming units]

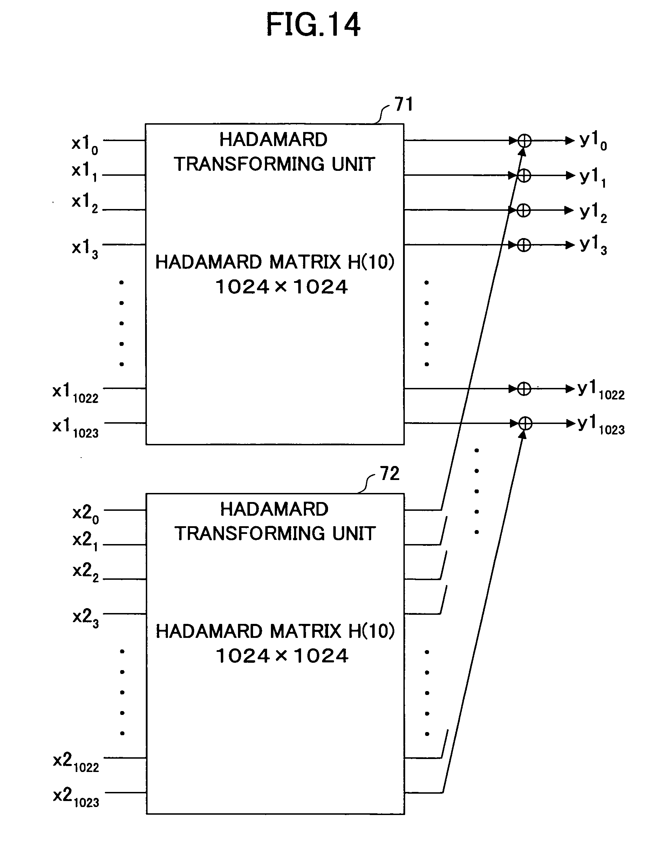

With reference to Fig. 14, an embodiment including plural orthogonal transforming units is described.

Fig. 14 shows an example using Hadamard transforming units 71 and 72. The structure shown in Fig. 14 includes the Hadamard transforming units 71 and 72 and 1024 adders.

It should be noted that the Unitary transform or the DFT transform may be used in the orthogonal transforming unit. It should be also noted that more than two orthogonal transforming units may be used in the present invention.

The Hadamard transforming units 71 and 72 use a 1024 times 1024 Hadamard matrix H(10). Input data ($x1_0$, $x1_1$, ... $x1_{1023}$) input to the Hadamard transforming unit 71 is different from input data ($x2_0$, $x2_1$, ... $x2_{1023}$) input to the Hadamard transforming unit 72.

The 1024 adders add outputs from the Hadamard transforming unit 71 and the corresponding outputs from the Hadamard transforming unit 72, and then output signals as if only one Hadamard transforming unit is present.

As with the structure shown in Fig. 5, this structure also improves noise immunity due to the orthogonal transforming unit.

Even if the Hadamard transforming units 71 and 72 do not have an orthogonal relationship with each other, interference can be reduced when they have a rotating relationship. Thus, when an error correction code is used in the transmission data, the receiving side can receive the data with few errors.

[Ternary QAM]

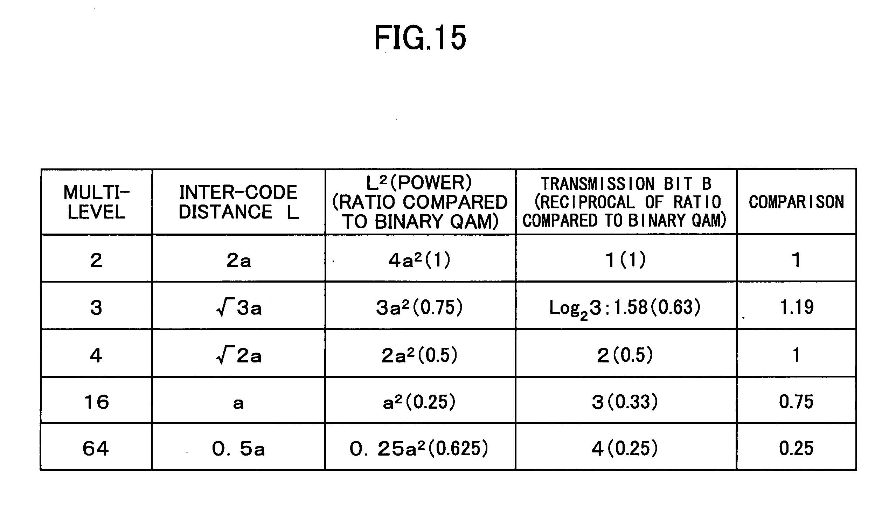

Fig. 15 shows comparisons among multi-level QAMs. Assuming that the inter-code distance for binary QAM is equal to $2\alpha$, the inter-code distances for ternary QAM, quarternary QAM, 16QAM, and 64QAM are equal to $\sqrt{3}a$, $\sqrt{2}a$, $\alpha$, and $0.5\alpha$, respectively. When these inter-code distances are converted to powers, they are expressed as $4\alpha^2$, $3\alpha^2$, $2\alpha^2$, and $0.25\alpha^2$, respectively. In the table, the ratio compared to binary QAM is written with parentheses. This ratio is herein represented as R1.

The numbers of transmission bits per one digit for binary QAM, ternary QAM, quarternary QAM, 16QAM, and 64QAM are equal to 1, $Log_2 3$, 2, 3, and 4, respectively. In the table, the reciprocal of the ratio compared to binary QAM is written with parentheses. This reciprocal of the ratio is herein represented as R2.

The column "comparison" in the table shows the ratio of R2 to R1. It is understood that ternary QAM is effective on noise.

Accordingly, when OFDM is used, modulating subcarriers by means of ternary QAM allows for efficient transmission.

When OFDM is used for the signal transforming unit 32 in Fig. 5 and subcarriers are modulated by means of ternary QAM, it is preferable that ternary data is input to the orthogonal transforming unit 31. Therefore, when subcarriers are modulated by means of ternary QAM in OFDM, a binary-to-ternary transforming circuit is provided in front of the orthogonal transforming unit 31 in order to input ternary data to the orthogonal transforming unit 31.

[Structure for a first data communication system]

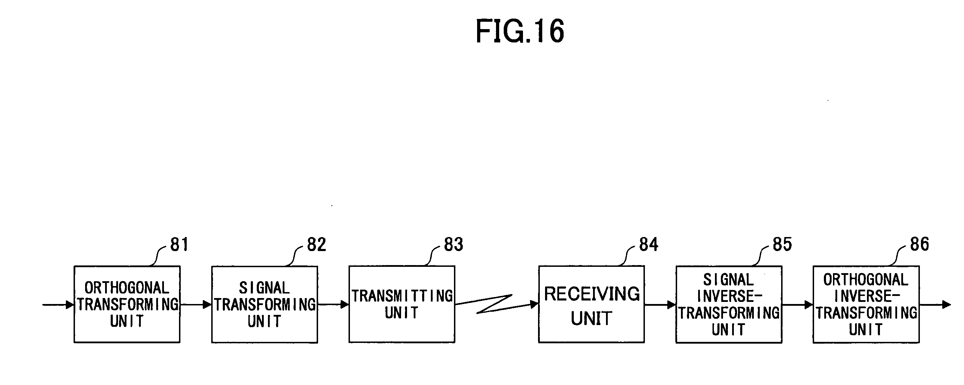

Fig. 16 shows a structure for a first data communication system. The structure shown in Fig. 16 includes an orthogonal transforming unit 81 using an N times N orthogonal matrix, a signal transforming unit 82 as an OFDM transforming unit or a ZCZ transforming unit, a transmitting unit 83, a receiving unit 84, a signal inverse-transforming unit 85 as an OFDM inverse-transforming unit or a ZCZ inverse-transforming unit, and an orthogonal inverse-transforming unit 86.

The orthogonal transforming unit 81 orthogonally transforms transmission data. The signal transforming unit 82 transforms the data orthogonally transformed by the orthogonal transforming unit 81 into an OFDM baseband signal or a ZCZ baseband signal. The transmitting unit 83 transmits the OFDM baseband signal or the ZCZ baseband signal transformed by the signal transforming unit 82 after transforming the OFDM baseband signal or the ZCZ baseband signal into a high frequency signal. The receiving unit 84 generates the OFDM baseband signal or the ZCZ baseband signal from the received high frequency signal. The signal inverse-transforming unit 85 inverse-transforms the OFDM baseband signal or the ZCZ baseband signal generated by the receiving unit 84. The orthogonal inverse-transforming unit 86 orthogonally inverse-transforms the orthogonally transformed signal output from the signal inverse-transforming unit 85.

[Structure for a second data communication system]

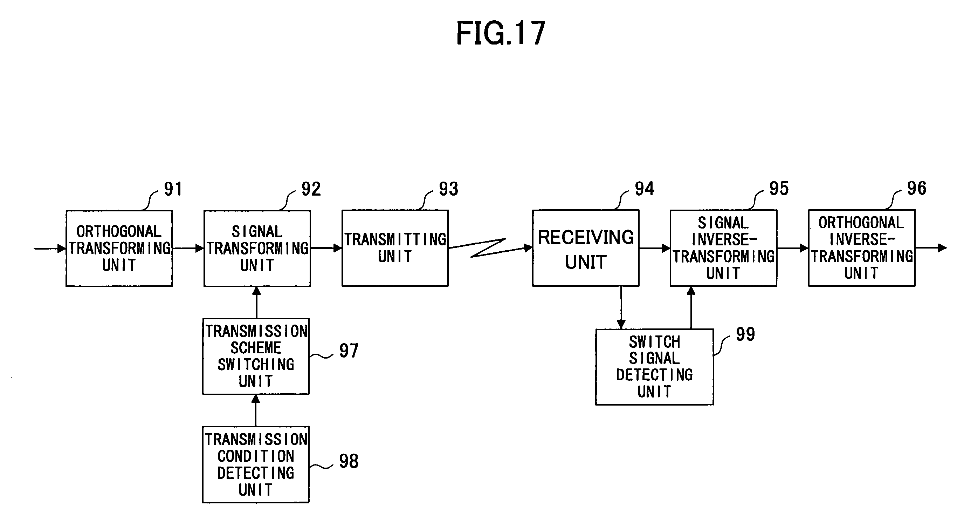

Fig. 17 shows a structure for a second data communication system. The structure shown in Fig. 17 further includes a transmission condition detecting unit 98, a transmission scheme switching unit 97, and a switch signal detecting unit 99, in addition to the structure shown in Fig. 16.

The second data communication system also includes an OFDM transforming unit and a ZCZ transforming unit in the signal transforming unit 92 and the signal inverse-transforming unit 95. The signal transforming unit 92 and the signal inverse-transforming unit 95 switch between the OFDM transforming unit and the ZCZ transforming unit to use either of them.

The transmission condition detecting unit 98 detects a transmission condition. The transmission scheme switching unit 97 switches the schemes for the signal transforming unit based on the transmission condition. It should be noted that the transmitting side transmits a switch signal to the receiving side in advance, upon switching the schemes for the signal transforming unit.

The receiving side detects the switch signal and switches the schemes for the signal inverse-transforming unit.

For example, although OFDM transmission where subcarriers are modulated by means of 64QAM has limited noise immunity, it improves the efficiency of transmission. On the other hand, although ZCZ transmission improves noise immunity, it has a limited efficiency of transmission.

Accordingly, the transmission scheme switching unit 97 switches the schemes, so that OFDM transmission where subcarriers are modulated by means of 64QAM is used in the case of low noise, and ZCZ transmission is used in the case of high noise.

The present invention is not limited to the aforementioned preferred embodiments thereof, so that various variations and changes are possible within the scope of the present invention.

The present application is based on Japanese Priority Application No. 2005-217717 filed on July 27, 2005 with the Japanese Patent Office, the entire contents of which are hereby incorporated by reference.

**Claims**

1. A data communication system comprising:

    an orthogonal transforming unit using an N times N orthogonal matrix;
    an OFDM transforming unit;
    a transmitting unit;
    a receiving unit;
    an OFDM inverse-transforming unit; and
    an orthogonal inverse-transforming unit; wherein

the orthogonal transforming unit orthogonally transforms transmission data,
the OFDM transforming unit transforms the data orthogonally transformed by the orthogonal transforming unit into an OFDM baseband signal,
the transmitting unit transmits the OFDM baseband signal transformed by the OFDM transforming unit after transforming the OFDM baseband signal into a high frequency signal,
the receiving unit generates the OFDM baseband signal from the received high frequency signal,
the OFDM inverse-transforming unit OFDM-inverse-transforms the OFDM baseband signal generated by the receiving unit, and
the orthogonal inverse-transforming unit orthogonally inverse-transforms the orthogonally transformed signal output from the OFDM inverse-transforming unit.

2. The data communication system as claimed in Claim 1, wherein;
a modulation scheme for subcarriers in the OFDM baseband signal is selected from BPSK, QPSK, 16QAM, and 64QAM.

3. A data communication system comprising:

an orthogonal transforming unit using an N times N orthogonal matrix;
a ZCZ transforming unit;
a transmitting unit;
a receiving unit;
a ZCZ inverse-transforming unit; and
an orthogonal inverse-transforming unit; wherein
the orthogonal transforming unit orthogonally transforms transmission data,
the ZCZ transforming unit transforms the data orthogonally transformed by the orthogonal transforming unit into a ZCZ baseband signal,
the transmitting unit transmits the ZCZ baseband signal transformed by the ZCZ transforming unit after transforming the ZCZ baseband signal into a high frequency signal,
the receiving unit generates the ZCZ baseband signal from the received high frequency signal,
the ZCZ inverse-transforming unit ZCZ-inverse-transforms the ZCZ baseband signal generated by the receiving unit, and
the orthogonal inverse-transforming unit orthogonally inverse-transforms the orthogonally transformed signal output from the ZCZ inverse-transforming unit.

4. The data communication system as claimed in any one of Claims 1-3, wherein;
the transform in the orthogonal transforming unit is selected from a Unitary transform, an Hadamard transform, and a DFT transform.

5. The data communication system as claimed in any one of Claims 1-4, wherein;
the orghogonal transforming unit comprises N adders and plural orthogonal transforming devices using the N times N orthogonal matrix with N input terminals and N output terminals,
different data is input to each input terminal in the orthogonal transforming devices,
the adders add outputs from the corresponding output terminals in the plural orthogonal transforming devices, and
outputs from the orthogonal transforming unit comprise outputs from the N adders.

6. The data communication system as claimed in any one of Claims 1, 3, 4, 5, wherein;
the transmission data is input to the OFDM transforming unit after the transmission data is transformed from binary data to ternary data.

7. The data communication system as claimed in Claim 6, wherein;
a modulation scheme for subcarriers in the OFDM baseband signal comprises a ternary QAM scheme.

8. A data transmitting apparatus comprising:

an orthogonal transforming unit using an N times N orthogonal matrix;
an OFDM transforming unit; and
a transmitting unit; wherein
the orthogonal transforming unit orthogonally transforms transmission data,

the OFDM transforming unit transforms the data orthogonally transformed by the orthogonal transforming unit into an OFDM baseband signal, and

the transmitting unit transmits the OFDM baseband signal transformed by the OFDM transforming unit after transforming the OFDM baseband signal into a high frequency signal.

**9.** A data transmitting apparatus comprising:

an orthogonal transforming unit using an N times N orthogonal matrix;
a ZCZ transforming unit; and
a transmitting unit; wherein
the orthogonal transforming unit orthogonally transforms transmission data,
the ZCZ transforming unit transforms the data orthogonally transformed by the orthogonal transforming unit into a ZCZ baseband signal, and
the transmitting unit transmits the ZCZ baseband signal transformed by the ZCZ transforming unit after transforming the ZCZ baseband signal into a high frequency signal.

**10.** A transmitting apparatus comprising:

an orthogonal transforming unit using an N times N orthogonal matrix;
an OFDM transforming unit;
a ZCZ transforming unit;
a transmitting unit;
a transmission condition detecting unit; and
a transmission scheme switching unit; wherein
the orthogonal transforming unit orthogonally transforms transmission data,
the OFDM transforming unit transforms the data orthogonally transformed by the orthogonal transforming unit into an OFDM baseband signal,
the ZCZ transforming unit transforms the data orthogonally transformed by the orthogonal transforming unit into a ZCZ baseband signal,
the transmitting unit transmits the OFDM baseband signal or the ZCZ baseband signal after transforming the OFDM baseband signal or the ZCZ baseband signal into a high frequency signal,
the transmission condition detecting unit detects a transmission condition, and
the transmission scheme switching unit switches between the OFDM transforming unit and the ZCZ transforming unit based on the transmission condition.

**Amended claims under Art. 19.1 PCT**

**1.** (Canceled)

**2.** (Canceled)

**3.** (Original) A data communication system comprising:

an orthogonal transforming unit using an N times N orthogonal matrix;
a ZCZ transforming unit;
a transmitting unit;
a receiving unit;
a ZCZ inverse-transforming unit; and
an orthogonal inverse-transforming unit; wherein
the orthogonal transforming unit orthogonally transforms transmission data,
the ZCZ transforming unit transforms the data orthogonally transformed by the orthogonal transforming unit into a ZCZ baseband signal,
the transmitting unit transmits the ZCZ baseband signal transformed by the ZCZ transforming unit after transforming the ZCZ baseband signal into a high frequency signal,
the receiving unit generates the ZCZ baseband signal from the received high frequency signal,
the ZCZ inverse-transforming unit ZCZ-inverse-transforms the ZCZ baseband signal generated by the receiving unit, and

the orthogonal inverse-transforming unit orthogonally inverse-transforms the orthogonally transformed signal output from the ZCZ inverse-transforming unit.

**4.** (Currently Amended) The data communication system as claimed in Claim 3, wherein;
the transform in the orthogonal transforming unit is selected from a Unitary transform, an Hadamard transform, and a DFT transform.

**5.** (Currently Amended) A data communication system comprising:

an orthogonal transforming unit using an N times N orthogonal matrix;
a signal transforming unit;
a transmitting unit;
a receiving unit;
a signal inverse-transforming unit; and
an orthogonal inverse-transforming unit; wherein
the orthogonal transforming unit orthogonally transforms transmission data,
the signal transforming unit transforms the data orthogonally transformed by the orthogonal transforming unit into a predetermined signal,
the transmitting unit transmits the predetermined signal transformed by the signal transforming unit after transforming the predetermined signal into a high frequency signal,
the receiving unit generates the predetermined signal from the received high frequency signal,
the signal inverse-transforming unit inverse-transforms the predetermined signal generated by the receiving unit,
the orthogonal inverse-transforming unit orthogonally inverse-transforms the orthogonally transformed signal output from the signal inverse-transforming unit,
the orghogonal transforming unit comprises N adders and plural orthogonal transforming devices using the N times N orthogonal matrix with N input terminals and N output terminals,
different data is input to each input terminal in the orthogonal transforming devices,
the adders add outputs from the corresponding output terminals in the plural orthogonal transforming devices, and
outputs from the orthogonal transforming unit comprise outputs from the N adders.

**6.** (Currently Amended) The data communication system as claimed in Claim 3 or 5, wherein;
the transmission data is input to the OFDM transforming unit after the transmission data is transformed from binary data to ternary data.

**7.** (Canceled)

**8.** (Canceled)

**9.** (Original) A data transmitting apparatus comprising:

an orthogonal transforming unit using an N times N orthogonal matrix;
a ZCZ transforming unit; and
a transmitting unit; wherein
the orthogonal transforming unit orthogonally transforms transmission data,
the ZCZ transforming unit transforms the data orthogonally transformed by the orthogonal transforming unit into a ZCZ baseband signal, and
the transmitting unit transmits the ZCZ baseband signal transformed by the ZCZ transforming unit after transforming the ZCZ baseband signal into a high frequency signal.

**10.** (Currently Amended) A data transmitting apparatus comprising:

an orthogonal transforming unit using an N times N orthogonal matrix;
an OFDM transforming unit;
a ZCZ transforming unit;
a transmitting unit;
a transmission condition detecting unit; and

a transmission scheme switching unit; wherein

the orthogonal transforming unit orthogonally transforms transmission data,

the OFDM transforming unit transforms the data orthogonally transformed by the orthogonal transforming unit into an OFDM baseband signal,

the ZCZ transforming unit transforms the data orthogonally transformed by the orthogonal transforming unit into a ZCZ baseband signal,

the transmitting unit transmits the OFDM baseband signal or the ZCZ baseband signal after transforming the OFDM baseband signal or the ZCZ baseband signal into a high frequency signal,

the transmission condition detecting unit detects a transmission condition, and

the transmission scheme switching unit switches between the OFDM transforming unit and the ZCZ transforming unit based on the transmission condition.

**11.** (New) The data transmitting apparatus as claimed in Claim 9 or 10, wherein;

the orghogonal transforming unit comprises N adders and plural orthogonal transforming devices using the N times N orthogonal matrix with N input terminals and N output terminals,

different data is input to each input terminal in the orthogonal transforming devices,

the adders add outputs from the corresponding output terminals in the plural orthogonal transforming devices, and

outputs from the orthogonal transforming unit comprise outputs from the N adders.

**12.** (New) A data receiving apparatus for receiving a signal from a transmitting apparatus including an orthogonal transforming unit using an N times N orthogonal matrix, a ZCZ transforming unit, and a transmitting unit comprising:

a receiving unit;

a ZCZ inverse-transforming unit; and

an orthogonal inverse-transforming unit; wherein

the receiving unit receives an orthogonally-transformed and ZCZ-transformed high frequency signal transmitted from the transmitting apparatus, and generates a ZCZ baseband signal from the received high frequency signal,

the ZCZ inverse-transforming unit ZCZ-inverse-transforms the ZCZ baseband signal generated by the receiving unit, and

the orthogonal inverse-transforming unit orthogonally inverse-transforms the orthogonally transformed signal output from the ZCZ inverse-transforming unit.

**13.** (New) A data communication system comprising:

an orthogonal transforming unit using an N times N orthogonal matrix;

an OFDM transforming unit;

a transmitting unit;

a receiving unit;

an OFDM inverse-transforming unit; and

an orthogonal inverse-transforming unit; wherein

the orthogonal transforming unit orthogonally transforms transmission data,

the OFDM transforming unit transforms the data orthogonally transformed by the orthogonal transforming unit into an OFDM baseband signal,

the transmitting unit transmits the OFDM baseband signal transformed by the OFDM transforming unit after transforming the OFDM baseband signal into a high frequency signal,

the receiving unit generates the OFDM baseband signal from the received high frequency signal,

the OFDM inverse-transforming unit OFDM-inverse-transforms the OFDM baseband signal generated by the receiving unit,

the orthogonal inverse-transforming unit orthogonally inverse-transforms the orthogonally transformed signal output from the OFDM inverse-transforming unit,

the orghogonal transforming unit comprises N adders and plural orthogonal transforming devices using the N times N orthogonal matrix with N input terminals and N output terminals,

different data is input to each input terminal in the orthogonal transforming devices,

the adders add outputs from the corresponding output terminals in the plural orthogonal transforming devices, and

outputs from the orthogonal transforming unit comprise outputs from the N adders.

**14.** (New) A data transmitting apparatus comprising:

an orthogonal transforming unit using an N times N orthogonal matrix;

an OFDM transforming unit; and

a transmitting unit; wherein

the orthogonal transforming unit orthogonally transforms transmission data,

the OFDM transforming unit transforms the data orthogonally transformed by the orthogonal transforming unit into an OFDM baseband signal,

the transmitting unit transmits the OFDM baseband signal transformed by the OFDM transforming unit after transforming the OFDM baseband signal into a high frequency signal,

the orghogonal transforming unit comprises N adders and plural orthogonal transforming devices using the N times N orthogonal matrix with N input terminals and N output terminals,

different data is input to each input terminal in the orthogonal transforming devices,

the adders add outputs from the corresponding output terminals in the plural orthogonal transforming devices, and

outputs from the orthogonal transforming unit comprise outputs from the N adders.

15. (New) A data receiving apparatus for receiving data from a transmitting apparatus including an orthogonal transforming unit using an N times N orthogonal matrix, an OFDM transforming unit, and a transmitting unit, in which the orghogonal transforming unit comprises N adders and plural orthogonal transforming devices using the N times N orthogonal matrix with N input terminals and N output terminals, different data is input to each input terminal in the orthogonal transforming devices, the adders add outputs from the corresponding output terminals in the plural orthogonal transforming devices, and outputs from the orthogonal transforming unit comprise outputs from the N adders, comprising:

a receiving unit;

an OFDM inverse-transforming unit; and

an orthogonal inverse-transforming unit; wherein

the receiving unit receives an orthogonally-transformed and OFDM-transformed high frequency signal transmitted from the transmitting apparatus, and generates an OFDM baseband signal from the received high frequency signal,

the OFDM inverse-transforming unit OFDM-inverse-transforms the OFDM baseband signal generated by the receiving unit, and

the orthogonal inverse-transforming unit orthogonally inverse-transforms the orthogonally transformed signal output from the OFDM inverse-transforming unit.

16. (New) A data transmitting apparatus comprising:

an orthogonal transforming unit using an N times N orthogonal matrix;

a signal transforming unit; and

a transmitting unit; wherein

the orthogonal transforming unit orthogonally transforms transmission data,

the signal transforming unit transforms the data orthogonally transformed by the orthogonal transforming unit into a predetermined signal,

the transmitting unit transmits the predetermined signal transformed by the signal transforming unit after transforming the predetermined signal into a high frequency signal,

the orghogonal transforming unit comprises N adders and plural orthogonal transforming devices using the N times N orthogonal matrix with N input terminals and N output terminals,

different data is input to each input terminal in the orthogonal transforming devices,

the adders add outputs from the corresponding output terminals in the plural orthogonal transforming devices, and

outputs from the orthogonal transforming unit comprise outputs from the N adders.

17. (New) A data receiving apparatus for receiving data from a transmitting apparatus including an orthogonal transforming unit using an N times N orthogonal matrix, a signal transforming unit, and a transmitting unit, in which the orghogonal transforming unit comprises N adders and plural orthogonal transforming devices using the N times N orthogonal matrix with N input terminals and N output terminals, different data is input to each input terminal in the orthogonal transforming devices, the adders add outputs from the corresponding output terminals in the plural orthogonal transforming devices, and outputs from the orthogonal transforming unit comprise outputs from the N adders, comprising:

a receiving unit;
a signal inverse-transforming unit configured to perform the reverse of the signal transforming unit; and
an orthogonal inverse-transforming unit; wherein
the receiving unit receives an orthogonally-transformed and signal-transformed high frequency signal transmitted from the transmitting apparatus, and generates a signal transformed by the signal transforming unit from the received high frequency signal,
the signal inverse-transforming unit generates the signal before being transformed by a signal transforming unit, and
the orthogonal inverse-transforming unit orthogonally inverse-transforms the orthogonally transformed signal output from the signal inverse-transforming unit.

# FIG.1

<u>10</u>

TRANSMISSION DATA → | S/P CONVERSION UNIT (11) | → | SUBCARRIER MODULATION UNIT (12) | → | IDFT (13) | → | PREPSEUDO-PERIODIC PART INSERTING UNIT (14) | → | TRANSMITTING UNIT (15) | → antenna (17)

OSCILLATOR (16) → $f_x$ → TRANSMITTING UNIT

(A)

antenna (21) → | RECEIVING UNIT (22) | → | PREPSEUDO-PERIODIC PART REMOVING UNIT (23) | → | DFT (24) | → | P/S CONVERSION UNIT (25) | → RECEIVED DATA

OSCILLATOR (26) → $f_x$ → RECEIVING UNIT

(B)

EP 1 909 424 A1

# FIG.2

| GI | EFFECTIVE SYMBOL (DATA, PILOT) | GI |

# FIG.3

COPY

COPY

| GI | GI | EFFECTIVE SYMBOL (DATA, PILOT) |

|← GT →|← ST →|

# FIG.4

IMAGINARY PART

REAL PART

IMAGINARY PART

# FIG.5

EP 1 909 424 A1

NOISE

TRANSMISSION
DATA

|  | /31 |  | /32 |  | /33 |  | /34 | RECEIVED DATA |
|---|---|---|---|---|---|---|---|---|
|  | ORTHOGONAL TRANSFORMING UNIT |  | SIGNAL TRANSFORMING UNIT (OFDM, ZCZ) |  | SIGNAL INVERSE-TRANSFORMING UNIT |  | ORTHOGONAL INVERSE-TRANSFORMING UNIT |  |

TRANSMISSION
LINE

# FIG.6

(A) : $H_{(0)} = [1]$

(B) : $H_{(1)} = \begin{pmatrix} 1 & 1 \\ 1 & -1 \end{pmatrix}$

(C) : $H_{(2)} = \begin{pmatrix} 1 & 1 & 1 & 1 \\ 1 & -1 & 1 & 1 \\ 1 & 1 & -1 & -1 \\ 1 & -1 & -1 & 1 \end{pmatrix}$

# FIG.7

$$H_{(n)} = \begin{pmatrix} H_{(n-1)} & H_{(n-1)} \\ H_{(n-1)} & -H_{(n-1)} \end{pmatrix}$$

## FIG.8

$x_0$

$x_1$

$x_2$

$x_3$

HADAMARD MATRIX H(10)
1024 × 1024

$x_{1022}$

$x_{1023}$

$y_0$

$y_1$

$y_2$

$y_3$

$y_{1022}$

$y_{1023}$

## FIG.9

$$
\begin{bmatrix}
(1 & 1 & 1 & -1) & (1 & -1 & 1 & 1) \\
(1 & 1 & -1 & 1) & (1 & -1 & -1 & -1)
\end{bmatrix}
$$

## FIG.10

VECTOR A = (1  1  1  -1  0  0  0  0  0  1  -1  1  1)
VECTOR B = (1  1  -1  1  0  0  0  0  0  1  -1  -1  -1)

# FIG.11

EP 1 909 424 A1

TRANSMITTING
SIDE

$x_0$ ——

$x_1$ ——

$x_2$ ——

$x_3$ ——

. . . . .

$x_{1022}$ ——

$x_{1023}$ ——

**41**
HADAMARD
TRANSFORMING UNIT

HADAMARD
TRANSFORMING UNIT
1024 × 1024

**42**
P/S
CONVERSION
UNIT

**43**
ZCZ
TRANSFORMING
UNIT
(SPREADING)

**44**
TRANSMITTING
UNIT

# FIG.12

EP 1 909 424 A1

# FIG.13

```
y_0、y_1、···y_1023  ────▶  ┌──────── 61
                            │   AND    │ ────▶
                            └──────────┘        y_0(VECTOR A)、
                                 ▲              y_1(VECTOR A)
                                 │                  ···
                                 │              y_1023(VECTOR A)
                            ┌──────── 62
                            │ ZCZ SEQUENCE │
                            │  (VECTOR A)  │
                            └──────────────┘
```

# FIG.14

$x1_0$

$x1_1$

$x1_2$

$x1_3$

$x1_{1022}$

$x1_{1023}$

$x2_0$

$x2_1$

$x2_2$

$x2_3$

$x2_{1022}$

$x2_{1023}$

71

HADAMARD
TRANSFORMING UNIT

HADAMARD MATRIX H(10)
1024 × 1024

72

HADAMARD
TRANSFORMING UNIT

HADAMARD MATRIX H(10)
1024 × 1024

$y1_0$

$y1_1$

$y1_2$

$y1_3$

$y1_{1022}$

$y1_{1023}$

# FIG.15

| MULTI-LEVEL | INTER-CODE DISTANCE L | L²(POWER) (RATIO COMPARED TO BINARY QAM) | TRANSMISSION BIT B (RECIPROCAL OF RATIO COMPARED TO BINARY QAM) | COMPARISON |
|---|---|---|---|---|
| 2 | $2a$ | $4a^2(1)$ | $1(1)$ | 1 |
| 3 | $\sqrt{3}a$ | $3a^2(0.75)$ | $\mathrm{Log}_2 3 : 1.58(0.63)$ | 1.19 |
| 4 | $\sqrt{2}a$ | $2a^2(0.5)$ | $2(0.5)$ | 1 |
| 16 | $a$ | $a^2(0.25)$ | $3(0.33)$ | 0.75 |
| 64 | $0.5a$ | $0.25a^2(0.625)$ | $4(0.25)$ | 0.25 |

EP 1 909 424 A1

# FIG.16

```
┌──────────────┐   ┌──────────────┐   ┌──────────────┐      ┌──────────────┐   ┌──────────────┐   ┌──────────────┐
│  ORTHOGONAL  │   │    SIGNAL    │   │ TRANSMITTING │      │  RECEIVING   │   │    SIGNAL    │   │  ORTHOGONAL  │
│ TRANSFORMING │──▶│ TRANSFORMING │──▶│     UNIT     │──╱──▶│     UNIT     │──▶│   INVERSE-   │──▶│   INVERSE-   │
│     UNIT     │   │     UNIT     │   │              │      │              │   │ TRANSFORMING │   │ TRANSFORMING │
│              │   │              │   │              │      │              │   │     UNIT     │   │     UNIT     │
└──────────────┘   └──────────────┘   └──────────────┘      └──────────────┘   └──────────────┘   └──────────────┘
      81                 82                 83                     84                 85                 86
```

# FIG.17

ORTHOGONAL TRANSFORMING UNIT — 91

SIGNAL TRANSFORMING UNIT — 92

TRANSMITTING UNIT — 93

RECEIVING UNIT — 94

SIGNAL INVERSE-TRANSFORMING UNIT — 95

ORTHOGONAL INVERSE-TRANSFORMING UNIT — 96

TRANSMISSION SCHEME SWITCHING UNIT — 97

TRANSMISSION CONDITION DETECTING UNIT — 98

SWITCH SIGNAL DETECTING UNIT — 99

EP 1 909 424 A1

<p style="text-align:center">**INTERNATIONAL SEARCH REPORT**</p>

| | International application No. |
| --- | --- |
| | PCT/JP2006/313537 |

A. CLASSIFICATION OF SUBJECT MATTER
*H04J11/00*(2006.01)i

According to International Patent Classification (IPC) or to both national classification and IPC

B. FIELDS SEARCHED

Minimum documentation searched (classification system followed by classification symbols)
H04J11/00

Documentation searched other than minimum documentation to the extent that such documents are included in the fields searched

| | | |
| --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2002/047304 A1 (Fujitsu Ltd.),<br>13 June, 2002 (13.06.02),<br>Figs. 1, 18, 19, 21<br>& US 2003/0117647 A1 & EP 1341332 A1 | 1,2,4,5,8<br>3,6,7,9,10 |
| X<br>Y | Koichi OKADA, Hiroyuki UESUGI, Shin'ya HATAYAMA,<br>Makoto ITAMI, Koji ITO, "Data Henkan ni yoru<br>OFDM Shingo no Ayamariritsu Tokusei no Kaizen",<br>ITE Technical Report, 20 February, 1997 (20.<br>02.97), Vol.21, No.12, pages 85 to 90 | 1,2,8<br>3,4,6,7,9,10 |
| Y | Shin'ya HATAYAMA, Koichi OKADA, Makoto ITAMI,<br>Koji ITO, "Data Henkan ni yoru Kyotaiiki<br>Kanshoka no OFDM Shingo no Tokusei no Kaizen",<br>1997 Nen IEICE Communications Society Conference<br>Koen Ronbunshu 1, 13 August, 1997 (13.08.97),<br>page 328 | 4 |

| ☒ Further documents are listed in the continuation of Box C. | ☐ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>02 October, 2006 (02.10.06) | Date of mailing of the international search report<br>10 October, 2006 (10.10.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/313537 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X<br>Y | Yoshiaki OWAKI, Tasuku KITAJIMA, Makoto ITAMI, Hirotake OTA, Koji ITO, "Trellis Hencho o Mochiita Data Kakusan OFDM ni Kansuru Ichikento", 2001 Nen The Institute of Electronics, Information anonbunshu, Tsushin 1, 07 March, 2001 (07.03.01), page 483 | 1,2,4,8<br>3,6,7,9,10 |
| Y | JP 3454407 B2  (NTT Docomo Inc.),<br>25 July, 2003 (25.07.03),<br>Fig. 9<br>& EP 836303 A2         & JP 10-178411 A<br>& US 6178158 B1         & EP 836303 B1<br>& DE 69719278 E | 1-4,6-10 |
| Y | WO 2005/046074 A1  (Yokohama TLO Co., Ltd.),<br>19 May, 2005 (19.05.05),<br>Full text; all drawings<br>(Family: none) | 3,9,10 |
| Y | JP 3589967 B2  (Matsushita Electric Industrial Co., Ltd.),<br>27 August, 2004 (27.08.04),<br>Par. No. [0110]<br>& WO 2002/005467 A1      & JP 2002-094479 A<br>& AU 200169484 A         & EP 1211835 A1<br>& US 2002/0150038 A1     & KR 2002033789 A<br>& CN 1389036 A           & IN 200200327 P2 | 6,7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005217717 A